# EUROPEAN PATENT APPLICATION

(11) **EP 2 706 456 A1**
(43) Date of publication of application: **12.03.2014**
(21) Application number: 12799505.8
(22) Date of filing: 02.08.2012
(51) Int. Cl.: G06F 9/44

(54) **WIDGET PROCESSING METHOD, DEVICE AND MOBILE TERMINAL**

(71) Applicant: Huawei Device Co., Ltd., Longgang Shenzhen Guangdong 518129 (CN)
(72) Inventor: QIAN, Kai, Shenzhen, Guangdong 518129 (CN)
(74) Representative: Maiwald Patentanwalts GmbH
(86) International application number: PCT/CN2012/079606
(87) International publication number: WO 2014/019207

(57) **Abstract**

The present invention provides a Widget processing method and a mobile terminal. The method includes: receiving a Widget placing instruction given by a user, where the Widget placing instruction is used for placing a designated Widget on a designated Home screen, the designated Widget is a Widget selected by the user in a Widget content exhibiting area, and the designated Home screen is a Home screen selected by the user in a Home space exhibiting area; if on the designated Home screen, there is not enough position for presenting the designated Widget, determining a display position of the designated Widget on a Home screen adjacent to the designated Home screen according to attribute information of the designated Widget, where the attribute information of the Widget includes position occupation information of the Widget; and placing the designated Widget in the display position on the Home screen adjacent to the designated Home screen. Technical solutions of the present invention solve a problem that operations are complicated when there is not enough space on the designated Home screen for placing the designated Widget, and increase Widget processing efficiency of the mobile terminal.

## Description

### FIELD OF TECHNOLOGY

The present invention relates to the mobile communication technologies, and in particular to a Widget processing method and apparatus, and a mobile terminal.

### BACKGROUND

With the development of science and technology, various user equipments emerge. Not only customization is increasingly highlighted in appearance of the various user equipments, but also development of highlighting customization is shown in an application field. These customized applications each have a batch of loyal users.

A Widget generally exists in a smart phone, is accepted by users, and is a good tool for implementing user customization. However, Widgets have various sizes, and some of the Widgets have relatively large sizes. These relatively large-size Widgets occupy large space of a Home screen. In a case that a relatively large-size Widget is placed on the Home screen, usually there is not enough space, which causes a failure of placing the Widget; or when a new Widget is placed on a Home screen with full space, a failure also occurs. The user usually needs to take many extra steps to add the new Widget again.

### SUMMARY

In view of this, embodiments of the present invention provide a Widget processing method and apparatus, and a mobile terminal, so as to solve a problem that operations are complicated when there is not enough space on a designated Home screen for placing a designated Widget.

In a first aspect, a Widget processing method is provided, including: receiving a Widget placing instruction given by a user, where the Widget placing instruction is used for placing a designated Widget on a designated Home screen, the designated Widget is a Widget selected by the user in a Widget content exhibiting area, and the designated Home screen is a Home screen selected by the user in a Home space exhibiting area; if on the designated Home screen, there is not enough position for presenting the designated Widget, determining a display position of the designated Widget on a Home screen adjacent to the designated Home screen according to attribute information of the designated Widget, where the attribute information of the Widget includes position occupation information of the Widget; and placing the designated Widget in the display position on the Home screen adjacent to the designated Home screen.

In a first possible implementation manner, the determining the display position of the designated Widget on the Home screen adjacent to the designated Home screen according to the attribute information of the designated Widget specifically includes: if on the Home screen adjacent to the designated Home screen, there is enough position for presenting the designated Widget, determining the display position of the designated Widget on the Home screen adjacent to the designated Home screen.

In combination with the first aspect or the first possible implementation manner of the first aspect, in a second possible implementation manner, the determining the display position of the designated Widget on the Home screen adjacent to the designated Home screen according to the attribute information of the designated Widget specifically includes: if on the Home screen adjacent to the designated Home screen, there is not enough position for presenting the designated Widget, creating a Home screen; placing the created Home screen in an adjacent position of the designated Home screen; and determining the display position of the designated Widget on the Home screen adjacent to the designated Home screen.

In combination with the first aspect and any possible implementation manner of the first aspect, in a fourth possible implementation manner, before the receiving the Widget placing instruction given by the user, the method includes: receiving a Widget editing instruction given by the user, and simultaneously displaying the Widget content exhibiting area and the Home space exhibiting area according to the Widget editing instruction.

In combination with the first aspect and any possible implementation manner of the first aspect, in a fifth possible implementation manner, the Home space exhibiting area displays one or more Home screens.

In a second aspect, a Widget processing apparatus is provided, including: an instruction receiving module, configured to receive a Widget placing instruction given by a user, where the Widget placing instruction is used for placing a designated Widget on a designated Home screen, the designated Widget is a Widget selected by the user in a Widget content exhibiting area, and the designated Home screen is a Home screen selected by the user in a Home space exhibiting area; an instruction parsing module, configured to parse the Widget placing instruction received by the instruction receiving module to obtain the designated Widget and the designated Home screen; a position determining module, configured to: if on the designated Home screen, there is not enough position for presenting the designated Widget, determine a display position of the designated Widget on a Home screen adjacent to the designated Home screen according to attribute information of the designated Widget, where the attribute information of the Widget includes position occupation information of the Widget; a Widget placing module, configured to place the designated Widget in the display position which is on the Home screen adjacent to the designated Home screen and is determined by the position determining module; a first presenting module, configured to present the Widget content exhibiting area, so that the user selects a Widget in the Widget content exhibiting area; and a second presenting module, configured to present the Home space exhibiting area, so that the user selects a Home screen in the Home space exhibiting area.

In a first possible implementation manner, the position determining module is specifically configured to: if on the designated Home screen, there is not enough position for presenting the designated Widget, and on the Home screen adjacent to the designated Home screen, there is enough position for presenting the designated Widget, determined the display position of the designated Widget on the Home screen adjacent to the designated Home screen.

In combination with the second aspect or the first possible implementation manner of the second aspect, in a second possible implementation manner, the position determining module includes: a Home screen creating unit, configured to create a Home screen if on the designated Home screen, there is not enough position for presenting the designated Widget, and on the Home screen adjacent to the designated Home screen, there is not enough position for presenting the designated Widget; a screen placing unit, configured to place, in an adjacent position of the designated Home screen, the Home screen created by the Home screen creating unit; and a position determining unit, configured to determined the display position of the designated Widget on the Home screen adjacent to the designated Home screen.

In combination with the second aspect and any possible implementation manner of the second aspect, in a fourth possible implementation manner, the apparatus further includes: a Widget editing unit, configured to receive a Widget editing instruction given by the user; and a simultaneous presentation triggering unit, configured to trigger simultaneous presentation of the first presenting module and the second presenting module if the Widget editing unit receives the Widget editing instruction.

In combination with the second aspect and any possible implementation manner of the second aspect, in a fifth possible implementation manner, a second displaying unit is specifically configured to display one or more Home screens in the Home space exhibiting area.

In a third aspect, a mobile terminal is provided, including: a display, an input apparatus, a memory, and a processor. The input apparatus is configured to receive a Widget placing instruction given by a user, where the Widget placing instruction is used for placing a designated Widget on a designated Home screen, the designated Widget is a Widget selected by the user in a Widget content exhibiting area, and the designated Home screen is a Home screen selected by the user in a Home space exhibiting area; the memory is configured to store attribute information of the Widget, where the attribute information of the Widget includes position occupation information of the Widget; the processor is configured to parse the Widget placing instruction received by the the input apparatus to obtain the designated Widget and the designated Home screen; is further configured to: if on the designated Home screen, there is not enough position for presenting the designated Widget, determine a display position of the designated Widget on a Home screen adjacent to the designated Home screen according to the attribute information which is of the designated Widget and stored in the memory; and is further configured to place the designated Widget in the display position on the Home screen adjacent to the designated Home screen; and the display is configured to present the Widget content exhibiting area, so that the user selects a Widget in the Widget content exhibiting area; and is further configured to present the Home space exhibiting area, so that the user selects a Home screen in the Home space exhibiting area.

In a first possible implementation manner, if on the Home screen adjacent to the designated Home screen, there is enough position for presenting the designated Widget, the processor is specifically configured to determine the display position of the designated Widget on the Home screen adjacent to the designated Home screen.

In combination with the first aspect or the first possible implementation manner of the first aspect, in a second possible implementation manner, if on the Home screen adjacent to the designated Home screen, there is not enough position for presenting the designated Widget, the processor is specifically configured to: create a Home screen; place, in an adjacent position of the designated Home screen, the Home screen created by the Home screen creating unit; and determined the display position of the designated Widget on the Home screen adjacent to the designated Home screen.

In combination with the second aspect and any possible implementation manner of the second aspect, in a fourth possible implementation manner, the input apparatus is further configured to receive a Widget editing instruction given by the user; and the display is further configured to simultaneously display the Widget content exhibiting area and the Home space exhibiting area if the input apparatus receives the Widget editing instruction.

In combination with the first aspect and any possible implementation manner of the first aspect, in a fifth possible implementation manner, the display is further configured to display one or more Home screens in the Home space exhibiting area.

For the Widget processing method and apparatus, and the mobile terminal which are provided by the embodiments of the present invention, if on the designated Home screen, there is not enough position for presenting the designated Widget, the display position on the Home screen adjacent to the designated Home screen is automatically searched for enough position for presenting the designated Widget, which, in comparison with the prior art, solves the problem that the operations are complicated when there is not enough space on the designated Home screen for placing the designated Widget, and increases Widget processing efficiency of the mobile terminal.

### BRIEF DESCRIPTION OF THE DRAWINGS

To illustrate technical solutions in embodiments of the present invention or in the prior art more clearly, the following briefly introduces accompanying drawings needed for describing the embodiments or the prior art. Apparently, the accompanying drawings in the following description are some embodiments of the present invention, and persons skilled in the art may further obtain other drawings according to these accompanying drawings without creative efforts.
FIG. 1 is a flow chart of a Widget processing method according to an embodiment of the present invention;
FIG. 2 is a flow chart of a Widget processing method according to another embodiment of the present invention;
FIG. 3 to FIG. 3J are schematic status diagrams of a display screen in a process of a Widget processing method of a mobile terminal according to still another embodiment of the present invention;
FIG. 4 is a schematic structural diagram of a Widget processing apparatus according to an embodiment of the present invention; and
FIG. 5 is a schematic structural diagram of a mobile terminal according to an embodiment of the present invention.

### DETAILED DESCRIPTION

To make objectives, technical solutions, and advantages of embodiments of the present invention more comprehensible, the technical solutions in the embodiments of the present invention are described clearly and completely in the following with reference to the accompanying drawings in the embodiments of the present invention. Apparently, the embodiments to be described are merely part rather than all of the embodiments of the present invention. All other embodiments obtained by persons skilled in the art based on the embodiments of the present invention without creative efforts shall fall within the protection scope of the present invention.

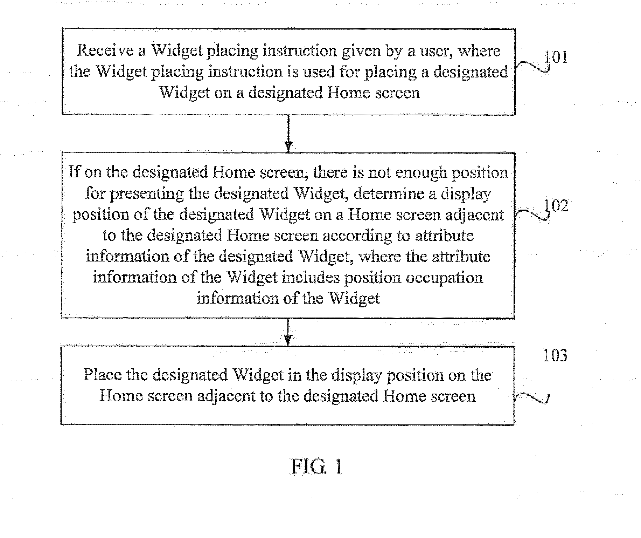

FIG. 1 is a flow chart of a Widget processing method according to an embodiment of the present invention. As shown in FIG. 1, the method in this embodiment includes:
Step 101: Receive a Widget placing instruction given by a user, where the Widget placing instruction is used for placing a designated Widget on a designated Home screen.

The designated Widget is a Widget selected by the user in a Widget content exhibiting area, and the designated Home screen is a Home screen selected by the user in a Home space exhibiting area.

Optionally, the user may select one or more Widgets in the Widget content exhibiting area at the same time.

Optionally, the Home space exhibiting area and the Widget content exhibiting area may be simultaneously presented on a screen, and may also be presented separately on the screen at different moments according to requirements.

Optionally, the Home space exhibiting area may simultaneously present one Home screen, and may also simultaneously present multiple Home screens. A specific manner may be simultaneously presenting thumbnails of multiple Home screens. In this way, the user may see the multiple Home screens at the same time, and know screen space occupation situations of the multiple Home screens and an application program that exists on the screens, so as to select a proper Home screen for placing the designated Widget. It should be noted that, if the number of Home screens in a mobile terminal is large, and not all the Home screens can be displayed even by displaying thumbnails of the Home screens, the user may use a preset gesture to turn a page, where the preset gesture may be that a finger slides on a screen, and may also be that the mobile terminal inclines at a certain angle. A gesture specifically adopted may be selected specifically according to requirements, and is not specifically limited in the embodiment of the present invention.

When the user needs to process the Widget, the user may place the designated Widget on the designated Home screen by giving the Widget placing instruction to the mobile terminal.

For the user, an operation for the user to give the Widget placing instruction may be: the user selects the designated Widget in the Widget content exhibiting area of the mobile terminal through a specific gesture, for example, pressing the designated Widget in the Widget content exhibiting area, and then dragging the designated Widget onto the designated Home screen in the Home space exhibiting area and then dropping the designated Widget. In addition to placing the designated Widget on the designated Home screen in a drag-and-drop manner, the designated Widget may also be placed on the designated Home screen in another manner such as clicking or double-clicking the designated Widget and clicking or double-clicking the designated Home screen. For the mobile terminal, an operation of receiving the Widget placing instruction given by the user may be: recognizing a specific gesture (for example, pressing, dragging and dropping, or clicking or double-clicking) according to a preset gesture instruction mapping table, and then placing the designated Widget on the designated Home screen.

It is noted here that, in addition to using the specific gesture, the operation that the user gives the Widget placing instruction may also be giving the Widget placing instruction through, for example, a function button or a menu on an interface, and any manner that can bear an instruction function may be adopted.

Step 102: If on the designated Home screen, there is not enough position for presenting the designated Widget, determine a display position of the designated Widget on a Home e screen adjacent to the designated Home screen according to attribute information of the designated Widget, where the attribute infonnation of the Widget includes position occupation information of the Widget.

The position occupation information of the Widget is information of a position that the Widget needs to occupy in space of a Home screen. For example, the position occupation information of the Widget may be represented by length × width occupied by the Widget, that is, represented by mxn, where m represents the number of cells occupied by the Widget laterally, and n represents the number of cells occupied by the Widget vertically; and the position occupation information of the Widget may also be represented by area occupied by the Widget, which is not specifically limited in the embodiment of the present invention.

The Home screen adjacent to the designated Home screen may be a previous Home screen of the designated Home screen, may also be a next Home screen, may also be the previous Home screen and the next Home screen, even may also be the previous Home screen and a previous Home screen of the previous Home screen, and may further be the next Home screen and a next Home screen of the next Home screen, which is not specifically limited in the embodiment of the present invention, and may be specifically set according to actual requirements.

It should be noted that, the Home screen adjacent to the designated Home screen may include one or more Home screens. When the Home screen adjacent to the designated Home e screen includes multiple Home screens, priorities of different adjacent screens may be set. First, a Home screen with a higher priority is searched to find whether there is enough presenting space, and then, a Home screen with a lower priority is searched to find whether there is enough presenting space. If there is enough space for presenting the designated Widget on the Home screen with the higher priority, the Home screen with the lower priority is not searched any more.

Optionally, the designated Widget may include one or more Widgets. When the user designates multiple Widgets at the same time, the designated Home screen and the Home screen adjacent to the designated Home screen may be searched by using a Widget 1 of the designated Widgets to find whether there is enough presenting space. If there is enough presenting space, the Widget 1 is placed on a Home screen where there is enough presenting space, and then reference is made to the foregoing step for execution of a placing process of a Widget 2, and the rest may be deduced by analogy, until execution of placing processes of all the designated Widgets is completed. The designated Home screen and the Home screen adjacent to the designated Home screen may also be searched by taking the multiple designated Widgets as a whole to find whether there is enough presenting space. A manner specifically adopted is not limited in the embodiment of the present invention.

An optional implementation manner of step 102 is: if on the Home screen adjacent to the designated Homscreen, there is enough position for presenting the designated Widget, determining the display position of the designated Widget on the Home screen adjacent to the designated Home screen.

For convenience of explanation, it is assumed that the Home screen adjacent to the designated Home screen is the next Home screen of the designated Homscreen. The user presses a music Widget in the Widget content exhibiting area, where position occupation information of the music Widget is 2x2, and then drags the music Widget to a first Home screen in the Home space exhibiting area and drops the music Widget. In this case, the remaining space on the first Home screen is 1×2, so on the first Home screen, there is not enough space for presenting the music Widget. Then, it is judged whether on a second Home screen, there is enough space for presenting the music Widget, and in this case, the remaining space on the second Home screen is 3×2, so on the second Home screen, there is enough space for presenting the music Widget. Then, a display position of the music Widget on the second Home screen is determined according to the position occupation information of the music Widget.

Another optional implementation manner of step 102 is: if on the Home screen adjacent to the designated Home screen, there is not enough position for presenting the designated Widget, creating a Home screen; placing the created Home screen in an adjacent position of the designated Home screen; and determining the display position of the designated Widget on the Home screen adjacent to the designated Home screen.

For convenience of explanation, it is assumed that the Home screen adjacent to the designated Home screen is the next Home screen of the designated Home screen. The user presses a weather Widget in the Widget content exhibiting area, where position occupation information of the weather Widget is 4×4, and then drags the weather Widget to a first Home screen in the Home space exhibiting area and drops the weather Widget. In this case, the remaining space on the first Home screen is 1×2, so on the first Home screen, there is not enough space for presenting the weather Widget. Then, it is judged that whether on a second Home screen, there is enough space for presenting the music Widget, and in this case, the remaining space on the second Home screen is 1×2, so on the second Home screen, there is not enough space for presenting the weather Widget. Then, a Home screen is created, and the created Home screen is placed in an adjacent position of the designated Home screen. That is, the created Home screen is taken as a new second Home screen, and an original Home screen becomes a new third Home screen, and original Home screens are re-sequenced as deduced by analogy. The new second Home screen has enough space for presenting the weather Widget, and a display position in which the weather Widget is placed on the new second Home screen is determined.

Step 103: Place the designated Widget in the display position on the Home screen adjacent to the designated Home screen.

It should be noted that, a specific display position of the designated Widget on the Home screen adjacent to the designated Homscreen may be specifically set according to requirements. For example, the designated Widget may be placed in a position which is the first to satisfy the position occupation information and is on the Home screen adjacent to the designated Home screen; the designated Widget may also be placed in a central position on the Home screen adjacent to the designated Home screen by taking good-looking screen displaying into consideration.

In this embodiment, the mobile terminal receives the Widget placing instruction given by the user, where the Widget placing instruction is used for placing the designated Widget on the designated Home screen, the Widget placing instruction is used for placing the designated Widget on the designated Home screen, the designated Widget is the Widget selected by the user in the Widget content exhibiting area, and the designated Home screen is the Home screen selected by the user in the Home space exhibiting area; if on the designated Home screen, there is not enough position for presenting the designated Widget, the display position of the designated Widget on the Home screen adjacent to the designated Home screen is determined according to the attribute information of the designated Widget, where the attribute information of Widget includes the position occupation information of the Widget; and the designated Widget is placed in the display position on the Home screen adjacent to the designated Home screen, which solves a problem that operations are complicated when there is not enough space on the designated Home screen for placing the designated Widget, and increases Widget processing efficiency of the mobile terminal.

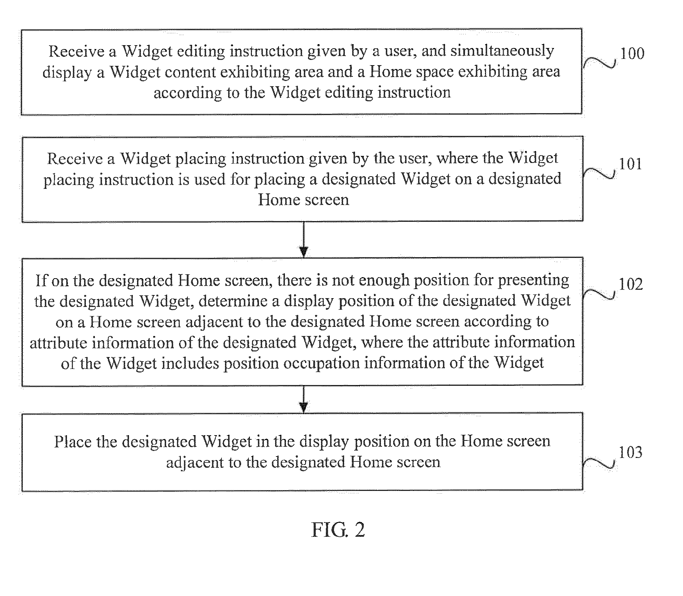

FIG. 2 is a flow chart of a Widget processing method according to another embodiment of the present invention. The method in this embodiment may be implemented based on the embodiment shown in FIG. 1. As shown in FIG. 2, before step 101, the method in this embodiment includes:
Step 100: Receive a Widget editing instruction given by a user, and simultaneously display a Widget content exhibiting area and a Home space exhibiting area according to the Widget editing instruction.

The Home space exhibiting area may simultaneously present one Home screen, and may also simultaneously present multiple Home screens. A specific manner may be simultaneously presenting thumbnails of multiple Home screens. In this way, the user may see the multiple Home screens at the same time, and know screen space occupation situations of the multiple Home screens and an application program that exists on the screens, so as to select a proper Home screen for placing a designated Widget. It should be noted that, if the number of Home screens in a mobile terminal is large, and not all the Home screens can be displayed even by displaying thumbnails of the Home screens, the user may use a preset gesture to turn a page, where the preset gesture may be that a finger slides on a screen, and may also be that the mobile terminal inclines at a certain angle. A gesture specifically adopted may be selected specifically according to requirements, and is not specifically limited in the embodiment of the present invention.

For the user, that the user gives the Widget editing instruction to the mobile terminal may be: the user performs an operation on a display screen of the mobile terminal through a specific gesture. For example, the user may adopt a manner of sliding from one end to the other end of the display screen, or adopt a manner of handwriting words such as "Widget editing instruction," on the display screen, or adopt a manner such as clicking or double-clicking on the display screen with a certain frequency, or may also adopt a manner of long-pressing the designated Widget in the Home space exhibiting area. For the mobile terminal, an operation of receiving the Widget editing instruction given by the user may be: the mobile terminal recognizes, according to a preset gesture instruction mapping table, a gesture of the user for performing an operation on the display screen of the mobile terminal, and then simultaneously displays the Widget content exhibiting area and the Home space exhibiting area.

It is noted here that, in addition to using the specific gesture, an operation that the user gives the Widget editing instruction may also be giving the Widget editing instruction through, for example, a function button or a menu on an interface, and any manner that can bear an instruction function may be adopted. For example, the user may also give the Widget editing instruction in a voice manner or though a gesture without directly touching the display screen (such manner is usually referred to as body gesture), or the like.

In this embodiment, by giving the Widget editing instruction to the mobile terminal, the user may enable the Widget content exhibiting area and the Home space exhibiting area to be simultaneously presented, which may enable the user to conveniently view an application program and a remaining space situation on a Home screen in the Home space exhibiting area, conveniently find a proper Home screen, and then drag the designated Widget to a designated Home screen or a Home screen adjacent to a designated Home screen.

In the following, an implementation process of the technical solution of the present invention is illustrated in combination with an operation status of a display screen of a mobile terminal.

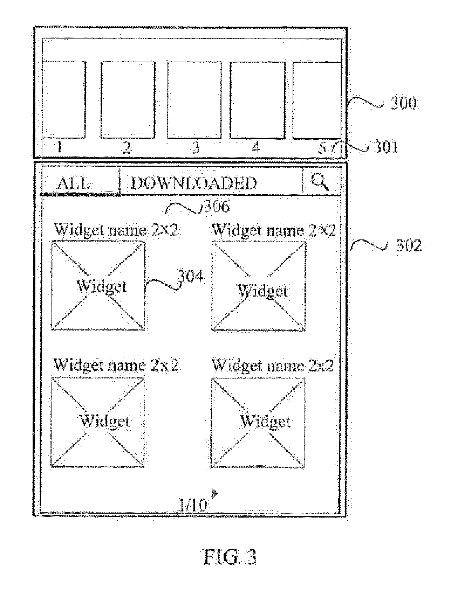

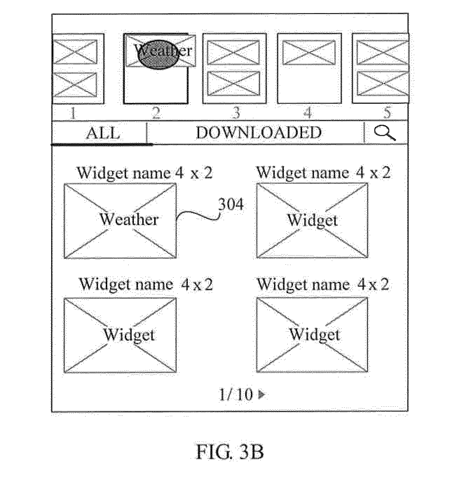

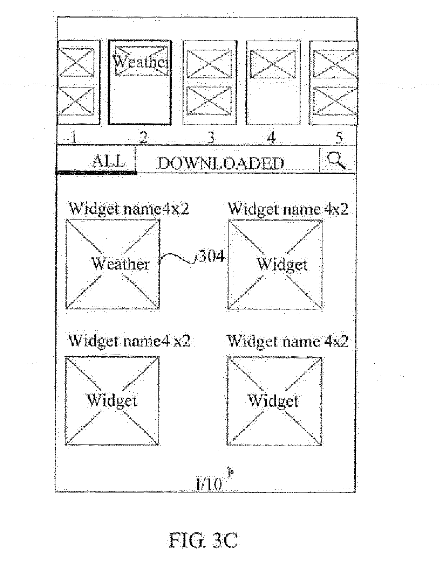

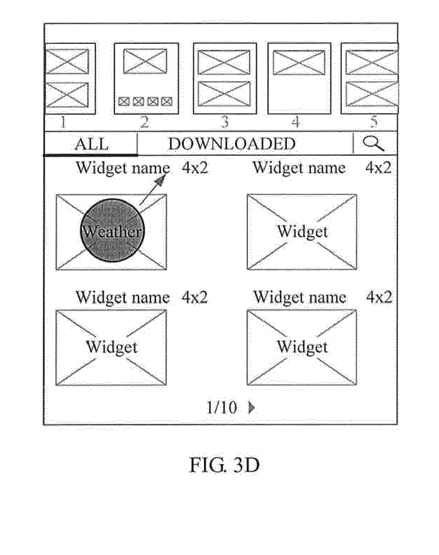

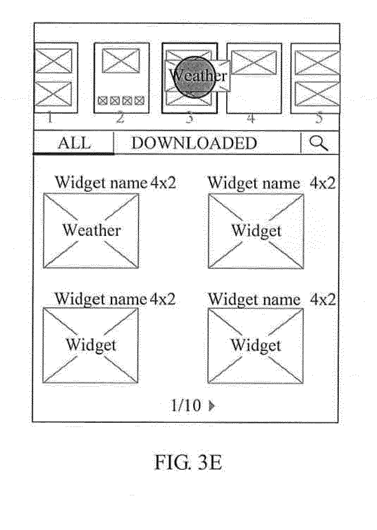

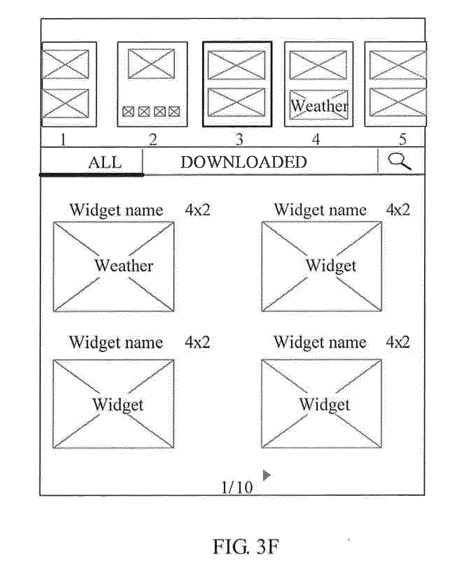

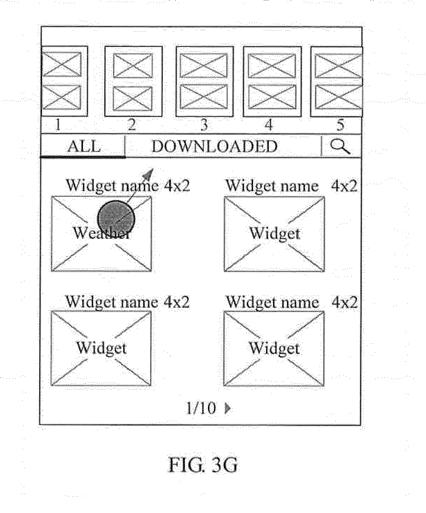

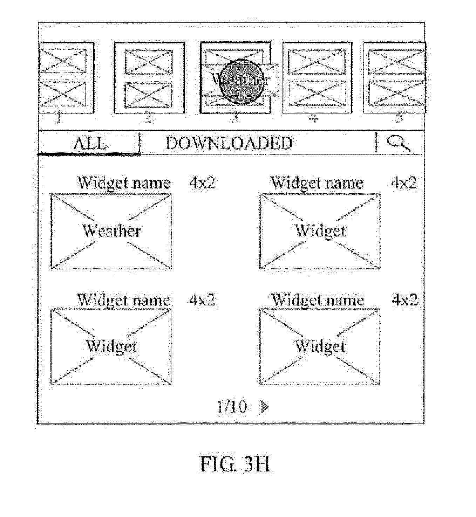

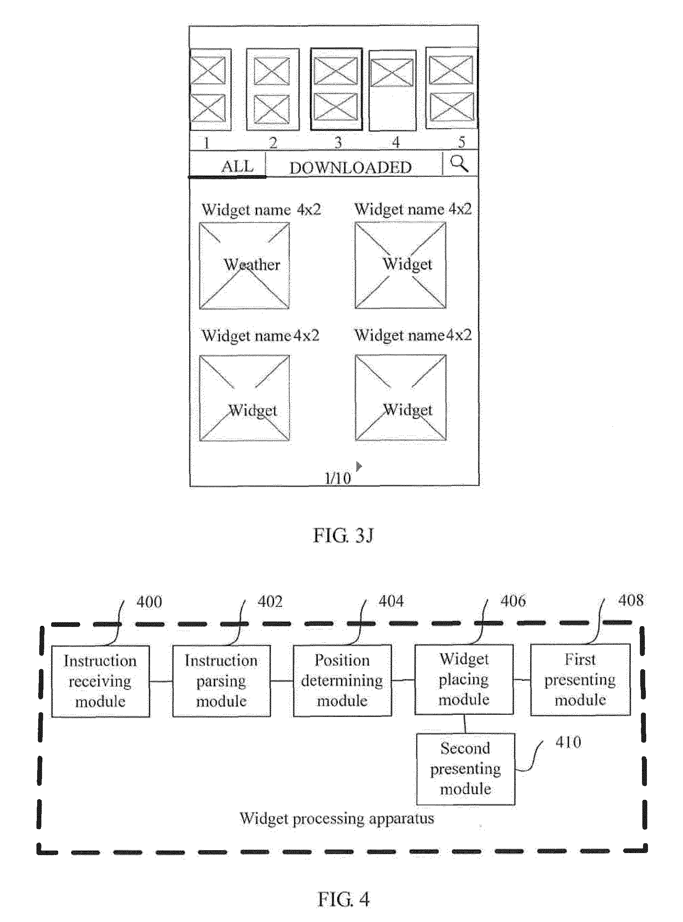

FIG. 3 is a schematic diagram of simultaneously displaying a Home space exhibiting area 300 and a Widget content exhibiting area 302. Thumbnails of multiple Home screens may be displayed simultaneously in the Home space exhibiting area 300, and a serial number 301 of a Home screen is placed below a thumbnail. The Widget content exhibiting area 302 may include multiple Widgets 304, and a manner of m×n is adopted to describe position occupation information 306 of each Widget.
Scenario 1: A user long-presses a Weather Widget in the Widget content exhibiting area 302 to give a Widget editing instruction to a mobile terminal. After receiving the Widget editing instruction, the mobile terminal simultaneously displays the Home space exhibiting area 300 and the Widget content exhibiting area 302, as shown in FIG. 3A. The user drags the Weather Widget in the Home space exhibiting area 300 to a second Home screen in the Home space exhibiting area 300. The second Home screen is displayed in a manner different from that of another Home screen. For example, a black frame is added around the second Home screen, as shown in FIG. 3B. The second Home screen has 4×4 space, and position occupation information of the Weather Widget is 4×2, so there is enough space for presenting the Weather Widget. The Weather Widget is presented on the second Home screen, as shown in FIG. 3C.
Scenario 2: A user long-presses a Weather Widget in the Widget content exhibiting area 302 to give a Widget editing instruction to a mobile terminal. After receiving the Widget editing instruction, the mobile terminal simultaneously displays the Home space exhibiting area 300 and the Widget content exhibiting area 302, as shown in FIG. 3D. The user drags the Weather Widget in the Home space exhibiting area 300 to a third Home screen in the Home space exhibiting area 300. The third Home screen is displayed in a manner different from that of another Home screen. For example, a black frame is added around the third Home screen, as shown in FIG. 3E. The third Home screen has no remaining space, and position occupation information of the Weather Widget is, so there is not enough space for presenting the Weather Widget. A fourth Home screen adjacent to the third Home screen is searched to find whether there is enough space for presenting the Weather Widget, and the remaining space on the fourth Home screen is 4×2, which may be used for presenting the Weather Widget, so the Weather Widget is presented on the fourth Home screen, as shown in FIG. 3F.
Scenario 3: A user long-presses a Weather Widget in the Widget content exhibiting area 302 to give a Widget editing instruction to a mobile terminal. After receiving the Widget editing instruction, the mobile terminal simultaneously displays the Home space exhibiting area 300 and the Widget content exhibiting area 302, as shown in FIG. 3G. The user drags the Weather Widget in the Home space exhibiting area 300 to a third Home screen in the Home space exhibiting area 300. The third Home screen is displayed in a manner different from that of another Home screen. For example, a black frame is added around the third Home screen, as shown in FIG. 3H. The third Home screen has no remaining space, and position occupation information of the Weather Widget is, so there is not enough space for presenting the Weather Widget. A fourth Home screen adjacent to the third Home screen is searched to find whether there is enough space for presenting the Weather Widget, and there is no remaining space on the fourth Home screen, so a Home screen is created, and the created Home screen is placed in an adjacent position of the fourth Home screen, that is, the created Home screen is taken as a new fourth Home screen, an original fourth Home screen becomes a new fifth Home screen, and original Home screens are re-sequenced as deduced by analogy. The new fourth Home screen has enough space for presenting the Weather Widget, and the Weather Widget is presented on the new fourth Home screen, as shown in FIG. 3J.

It should be noted that, in scenario 1, scenario 2 and scenario 3, distinguishing display may be performed, distinguishing display may also be performed on a Home screen on which a designated Widget is placed finally, and distinguishing display may also be performed on both a designated Home screen and the Home screen on which the designated Widget is placed finally.

FIG. 4 is a schematic structural diagram of a Widget processing apparatus according to an embodiment of the present invention. As shown in FIG. 4, the Widget processing apparatus in this embodiment includes: an instruction receiving module 400, an instruction parsing module 402, a position determining module 404, a Widget placing module 406, a first presenting module 408, and a second presenting module 410.

The instruction receiving module 400 is configured to receive a Widget placing instruction given by a user, where the Widget placing instruction is used for placing a designated Widget on a designated Home screen, the designated Widget is a Widget selected by the user in a Widget content exhibiting area, and the designated Home screen is a Home screen selected by the user in a Home space exhibiting area.

The designated Widget is the Widget selected by the user in the Widget content exhibiting area, and the designated Home screen is the Home screen selected by the user in the Home space exhibiting area.

Optionally, the user may select one or more Widgets in the Widget content exhibiting area at the same time.

Optionally, the Home space exhibiting area and the Widget content exhibiting area may be simultaneously presented on a screen, and may also be presented separately on the screen at different moments according to requirements.

Optionally, the Home space exhibiting area may simultaneously present one Home screen, and may also simultaneously present multiple Home screens. A specific manner may be simultaneously presenting thumbnails of multiple Home screens. In this way, the user may see the multiple Home screens at the same time, and know screen space occupation situations of the multiple Home screens and an application program that exists on the screens, so as to select a proper Home screen for placing the designated Widget. It should be noted that, if the number of Home screens in a mobile terminal is large, and not all the Home screens can be displayed even by displaying thumbnails of the Home screens, the user may use a preset gesture to turn a page, where the preset gesture may be that a finger slides on a screen, and may also be that the mobile terminal inclines at a certain angle. A gesture specifically adopted may be selected specifically according to requirements, and is not specifically limited in the embodiment of the present invention.

When the user needs to process the Widget, the user may place the designated Widget on the designated Home screen by giving the Widget placing instruction to the mobile terminal.

For the user, an operation that the user gives the Widget placing instruction may be: the user selects the designated Widget in the Widget content exhibiting area of the mobile terminal through a specific gesture, for example, pressing the designated Widget in the Widget content exhibiting area, and then dragging the designated Widget onto the designated Home screen in the Home space exhibiting area and then dropping the designated Widget. In addition to placing the designated Widget on the designated Home screen in a drag-and-drop manner, the designated Widget may also be placed on the designated Home screen in another manner such as clicking or double-clicking the designated Widget and clicking or double-clicking the designated Home screen. For the mobile terminal, an operation of receiving the Widget placing instruction given by the user may be: recognizing a specific gesture (for example, pressing, dragging and dropping, or clicking or double-clicking) according to a preset gesture instruction mapping table, and then placing the designated Widget on the designated Home screen.

It is noted here that, in addition to using the specific gesture, the operation that the user gives the Widget placing instruction may also be giving the Widget placing instruction through, for example, a function button or a menu on an interface, and any manner that can bear an instruction function may be adopted.

The instruction parsing module is configured to parse the Widget placing instruction received by the instruction receiving module to obtain the designated Widget and the designated Home screen.

Position occupation information of the Widget is information of a position that the Widget needs to occupy in space of a Home screen. For example, the position occupation information of the Widget may be represented by length × width occupied by the Widget, that is, represented by m×n, where m represents the number of cells occupied by the Widget laterally, and n represents the number of cells occupied by the Widget vertically; and the position occupation information of the Widget may also be represented by area occupied by the Widget, which is not specifically limited in the embodiment of the present invention.

A Home screen adjacent to the designated Home screen may be a previous Home screen of the designated Home screen, may also be a next Home screen, may also be the previous Home screen and the next Home screen, even may also be the previous Home screen and a previous Home screen of the previous Home screen, and may further be the next Home screen and a next Home screen of the next Home screen, which is not specifically limited in the embodiment of the present invention, and may be specifically set according to actual requirements.

It should be noted that, the Home screen adjacent to the designated Home screen may include one or more Home screens. When the Home screen adjacent to the designated Home screen includes multiple Home screens, priorities of different adjacent screens may be set. First, a Home screen with a higher priority is searched to find whether there is enough presenting space, and then, a Home screen with a lower priority is searched to find whether there is enough presenting space. If there is enough space for presenting the designated Widget on the Home screen with the higher priority, the Home screen with the lower priority is not searched any more.

The position determining module is configured to: if on the designated Home screen, there is not enough position for presenting the designated Widget, determine a display position of the designated Widget on the Home screen adjacent to the designated Home screen according to attribute information of the designated Widget, where the attribute information of the Widget includes the position occupation information of the Widget.

Optionally, the designated Widget may include one or more Widgets. When the user designates multiple Widgets at the same time, the designated Home screen and the Home screen adjacent to the designated Home screen may be searched by using a Widget 1 of the designated Widgets to find whether there is enough presenting space. If there is enough presenting space, the Widget 1 is placed on a Home screen where there is enough presenting space, and then reference is made to the foregoing step for execution of a placing process of a Widget 2, and the rest may be deduced by analogy, until execution of placing processes of all the designated Widgets is completed. The designated Home screen and the Home screen adjacent to the designated Home screen may also be searched by taking the multiple designated Widgets as a whole to find whether there is enough presenting space. A manner specifically adopted is not limited in the embodiment of the present invention.

The Widget placing module is configured to place the designated Widget in the display position which is on the Home screen adjacent to the designated Home screen and is determined by the position determining module; the first presenting module is configured to present the Widget content exhibiting area, so that the user selects a Widget in the Widget content exhibiting area; and the second presenting module is configured to present the Home space exhibiting area, so that the user selects a Home screen in the Home space exhibiting area.

It should be noted that, a specific display position of the designated Widget on the Home screen adjacent to the designated Home screen may be specifically set according to requirements. For example, the designated Widget may be placed in a position which is the first to satisfy the position occupation information and is on the Home screen adjacent to the designated Home screen; the designated Widget may also be placed in a central position on the Home screen adjacent to the designated Home screen by taking good-looking screen displaying into consideration.

Optionally, the position determining module is specifically configured to: if on the designated Home screen, there is not enough position for presenting the designated Widget, and on the Home screen adjacent to the designated Home screen, there is enough position for presenting the designated Widget, determine the display position of the designated Widget on the Home screen adjacent to the designated Home screen.

Optionally, a Home screen creating unit is configured to create a Home screen if on the designated Home screen, there is not enough position for presenting the designated Widget, and on the Home screen adjacent to the designated Home screen, there is not enough position for presenting the designated Widget; a screen placing unit is configured to place, in an adjacent position of the designated Home screen, the Home screen created by the Home screen creating unit; and a position determining unit is configured to determined the display position of the designated Widget on the Home screen adjacent to the designated Home screen.

Optionally, the Widget processing apparatus further includes a Widget editing unit and a simultaneous presentation triggering unit. The Widget editing unit is configured to receive a Widget editing instruction given by the user; and the simultaneous presentation triggering unit is configured to trigger simultaneous presentation of the first presenting module and the second presenting module if the Widget editing unit receives the Widget editing instruction.

Each functional module of the mobile terminal in this embodiment may be used to execute a process of the Widget processing method of the mobile terminal shown in FIG. 1, its specific working principle is not repeatedly described, and for details, reference is made to the description of the method embodiment.

The mobile terminal in this embodiment may be various touch-screen devices such as a cell phone, a tablet computer and an ipad.

In this embodiment, the mobile terminal receives the Widget placing instruction given by the user, where the Widget placing instruction is used for placing the designated Widget on the designated Home screen, the Widget placing instruction is used for placing the designated Widget on the designated Home screen, the designated Widget is the Widget selected by the user in the Widget content exhibiting area, and the designated Home screen is the Home screen selected by the user in the Home space exhibiting area; if on the designated Home screen, there is not enough position for presenting the designated Widget, the display position of the designated Widget on the Home screen adjacent to the designated Home screen is determined according to the attribute information of the designated Widget, where the attribute information of the Widget includes the position occupation information of the Widget; and the designated Widget is placed in the display position on the Home screen adjacent to the designated Home screen, which solves a problem that operations are complicated when there is not enough space on the designated Home screen for placing the designated Widget, and increases Widget processing efficiency of the mobile terminal.

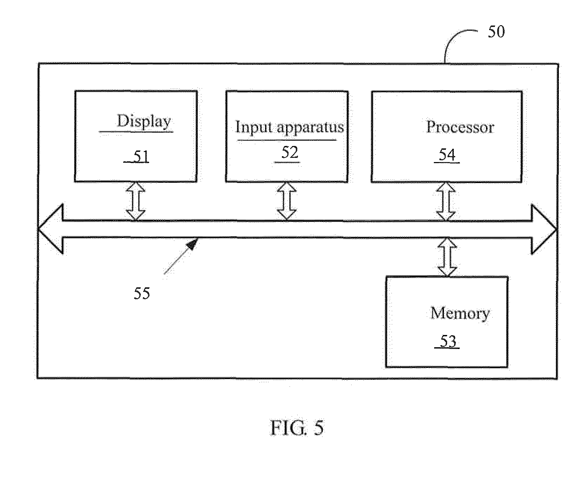

FIG. 5 is a schematic structural diagram of a mobile terminal according to an embodiment of the present invention.

An apparatus 50 includes: a display 51, an input apparatus 52, a memory 53, a processor 54 and a bus 55.

The display 51 may be a suitable apparatus such as a cathode ray tube (CRT, Cathode Ray Tube) display, a liquid crystal display(LCD, Liquid Crystal Display) display, or a touch screen(Touch Screen), and an instruction is received through the bus 55 to enable a screen of the display to present a graphical user interface.

The input apparatus 52 may include any suitable apparatus such as a keyboard, a mouse, a track recognizer, and a voice recognition interface, and is configured to receive an input of a user, and generates a control input and send the control input to the processor or another component through the bus 55. Particularly, when the display of the apparatus 50 has a touch screen, the display is also the input apparatus at the same time.

In addition, the memory 53 may include a RAM and a ROM, or any fixed storage medium, or a removable storage medium, and is configured to store a program that is capable of executing the embodiment of the present invention or an application database of the embodiment of the present invention, where an input of another component or stored information invoked by another component, for example, a movement track, is received through the bus 55.

The processor 54 is configured to execute the program which is of the embodiment of the present invention and stored by the memory 53, and perform two-way communication with another apparatus through the bus.

The memory 53 and the processor 54 may also be integrated into a physical module applying the embodiment of the present invention, and the program implementing the embodiment of the present invention is stored and run in the physical module.

Components of the apparatus 50 are coupled to each other through the bus system 55, where in addition to a data bus, the bus system 55 may further include a power bus, a control bus, and a status signal bus and so on. However, for clear illustration, various buses are all marked as the bus system 55 in the figure.

In the embodiment of the present invention, each unit of the apparatus 50 executes the following content respectively.

The input apparatus 52 is configured to receive a Widget placing instruction given by a user, where the Widget placing instruction is used for placing a designated Widget on a designated Home screen, the designated Widget is a Widget selected by the user in a Widget content exhibiting area, and the designated Home screen is a Home screen selected by the user in a Home space exhibiting area.

The memory 53 is configured to store attribute information of the Widget, where the attribute information of the Widget includes position occupation information of the Widget.

The processor 54 is configured to parse the Widget placing instruction received by the the input apparatus 52 to obtain the designated Widget and the designated Home screen; is further configured to: if on the designated Home screen, there is not enough position for presenting the designated Widget, determine a display position of the designated Widget on a Home screen adjacent to the designated Home screen according to the attribute information which is of the designated Widget and stored in the memory; and is further configured to place the designated Widget in the display position on the Home screen adjacent to the designated Home screen.

The display 51 is configured to present the Widget content exhibiting area, so that the user selects a Widget in the Widget content exhibiting area; and is further configured to present the Home space exhibiting area, so that the user selects a Home screen in the Home space exhibiting area.

Optionally, if on the Home screen adjacent to the designated Home screen, there is enough position for presenting the designated Widget, the processor 54 is specifically configured to determine the display position of the designated Widget on the Home screen adjacent to the designated Home screen.

Optionally, if on the Home screen adjacent to the designated Home screen, there is not enough position for presenting the designated Widget, the processor 54 is specifically configured to: create a Home screen; place, in an adjacent position of the designated Home screen, the Home screen created by the Home screen creating unit; and determined the display position of the designated Widget on the Home screen adjacent to the designated Home screen.

Optionally, the input apparatus 52 is further configured to receive a Widget editing instruction given by the user; and the display is further configured to simultaneously display the Widget content exhibiting area and the Home space exhibiting area if the input apparatus 52 receives the Widget editing instruction.

Optionally, the display 51 is further configured to display one or more Home screens in the Home space exhibiting area.

Optionally, the Home space exhibiting area may simultaneously present one Home screen, and may also simultaneously present multiple Home screens. A specific manner may be simultaneously presenting thumbnails of multiple Home screens. In this way, the user may see the multiple Home screens at the same time, and know screen space occupation situations of the multiple Home screens and an application program that exists on the screens, so as to select a proper Home screen for placing the designated Widget. It should be noted that, if the number of Home screens in a mobile terminal is large, and not all the Home screens can be displayed even by displaying thumbnails of the Home screens, the user may use a preset gesture to turn a page, where the preset gesture may be that a finger slides on a screen, and may also be that the mobile terminal inclines at a certain angle. A gesture specifically adopted may be selected specifically according to requirements, and is not specifically limited in the embodiment of the present invention.

When the user needs to process the Widget, the user may place the designated Widget on the designated Home screen by giving the Widget placing instruction to the mobile terminal.

For the user, an operation that the user gives the Widget placing instruction may be: the user selects the designated Widget in the Widget content exhibiting area of the mobile terminal through a specific gesture, for example, pressing the designated Widget in the Widget content exhibiting area, and then dragging the designated Widget onto the designated Home screen in the Home space exhibiting area and then dropping the designated Widget. In addition to placing the designated Widget on the designated Home screen in a drag-and-drop manner, the designated Widget may also be placed on the designated Home screen in another manner such as clicking or double-clicking the designated Widget and clicking or double-clicking the designated Home screen. For the mobile terminal, an operation of receiving the Widget placing instruction given by the user may be: recognizing a specific gesture (for example, pressing, dragging and dropping, or clicking or double-clicking) according to a preset gesture instruction mapping table, and then placing the designated Widget on the designated Home screen.

It is noted here that, in addition to using the specific gesture, the operation that the user gives the Widget placing instruction may also be giving the Widget placing instruction through, for example, a function button or a menu on an interface, and any manner that can bear an instruction function may be adopted.

The position occupation information of the Widget is information of a position that the Widget needs to occupy in space of a Home screen. For example, the position occupation information of the Widget may be represented by length × width occupied by the Widget, that is, represented by m×n, where m represents the number of cells occupied by the Widget laterally, and n represents the number of cells occupied by the Widget vertically; and the position occupation information of the Widget may also be represented by area occupied by the Widget, which is not specifically limited in the embodiment of the present invention.

The Home screen adjacent to the designated Home screen may be a previous Home screen of the designated Home screen, may also be a next Home screen, may also be the previous Home screen and the next Home screen, even may also be the previous Home screen and a previous Home screen of the previous Home screen, and may further be the next Home screen and a next Home screen of the next Home screen, which is not specifically limited in the embodiment of the present invention, and may be specifically set according to actual requirements.

It should be noted that, the Home screen adjacent to the designated Home screen may include one or more Home screens. When the Home screen adjacent to the designated Home screen includes multiple Home screens, priorities of different adjacent screens may be set. First, a Home screen with a higher priority is searched to find whether there is enough presenting space, and then, a Home screen with a lower priority is searched to find whether there is enough presenting space. If there is enough space for presenting the designated Widget on the Home screen with the higher priority, the Home screen with the lower priority is not searched any more.

Optionally, the designated Widget may include one or more Widgets. When the user designates multiple Widgets at the same time, the designated Home screen and the Home screen adjacent to the designated Home screen may be searched by using a Widget 1 of the designated Widgets to find whether there is enough presenting space. If there is enough presenting space, the Widget 1 is placed on a Home screen where there is enough presenting space, and then reference is made to the foregoing step for execution of a placing process of a Widget 2, and the rest may be deduced by analogy, until execution of placing processes of all the designated Widgets is completed. The designated Home screen and the Home screen adjacent to the designated Home screen may also be searched by taking the multiple designated Widgets as a whole to find whether there is enough presenting space. A manner specifically adopted is not limited in the embodiment of the present invention.

Each hardware of the mobile terminal in this embodiment may be used to execute a process of the Widget processing method of the mobile terminal shown in FIG. 1, its specific working principle is not repeatedly described, and for details, reference is made to the description of the method embodiment.

The mobile terminal in this embodiment may be various touch-screen devices such as a cell phone, a tablet computer and an ipad.

In this embodiment, the mobile terminal receives the Widget placing instruction given by the user, where the Widget placing instruction is used for placing the designated Widget on the designated Home screen, the Widget placing instruction is used for placing the designated Widget on the designated Home screen, the designated Widget is the Widget selected by the user in the Widget content exhibiting area, and the designated Home screen is the Home screen selected by the user in the Home space exhibiting area; if on the designated Home screen, there is not enough position for presenting the designated Widget, the display position of the designated Widget on the Home screen adjacent to the designated Home screen is determined according to the attribute information of the designated Widget, where the attribute information of the Widget includes the position occupation information of the Widget; and the designated Widget is placed in the display position on the Home screen adjacent to the designated Home screen, which solves a problem that operations are complicated when there is not enough space on the designated Home screen for placing the designated Widget, and increases Widget processing efficiency of the mobile terminal.

Persons skilled in the art should understand that all or part of the steps in each of the foregoing method embodiments may be implemented by a program instructing relevant hardware. The program may be stored in a computer readable storage medium. When the program is executed, the steps in each of the foregoing method embodiments are performed. The storage medium includes various media that are capable of storing program codes, such as a ROM, a RAM, a magnetic disk, or an optical disk.

Finally, it should be noted that each of the foregoing embodiments is merely used for describing the technical solutions of the present invention, rather than limiting the present invention. Although the present invention is illustrated in detail with reference to each of the foregoing embodiments, persons skilled in the art should understand that they may still make modifications to the technical solutions recorded in each of the foregoing embodiments, or make equivalent substitutions to part or all of the technical features of the technical solutions; however, such modifications and substitutions do not cause the essence of the corresponding technical solutions to depart from the scope of the technical solutions of the embodiments of the present invention.

## Claims

1. A Widget processing method, comprising:
receiving a Widget placing instruction given by a user, wherein the Widget placing instruction is used for placing a designated Widget on a designated Home screen, the designated Widget is a Widget selected by the user in a Widget content exhibiting area, and the designated Home screen is a Home screen selected by the user in a Home space exhibiting area;
if on the designated Home screen, there is not enough position for presenting the designated Widget, determining a display position of the designated Widget on a Home screen adjacent to the designated Home screen according to attribute information of the designated Widget, wherein the attribute information of the Widget comprises position occupation information of the Widget; and
placing the designated Widget in the display position on the Home screen adjacent to the designated Home screen.

2. The Widget processing method according to claim 1, wherein the determining the display position of the designated Widget on the Home screen adjacent to the designated Home screen according to the attribute information of the designated Widget specifically comprises:
if on the Home screen adjacent to the designated Home screen, there is enough position for presenting the designated Widget, determining the display position of the designated Widget on the Home screen adjacent to the designated Home screen.

3. The Widget processing method according to claim 1 or 2, wherein the determining the display position of the designated Widget on the Home screen adjacent to the designated Home screen according to the attribute information of the designated Widget specifically comprises:
if on the Home screen adjacent to the designated Home screen, there is not enough position for presenting the designated Widget, creating a Home screen;
placing the created Home screen in an adjacent position of the designated Home screen; and
determining the display position of the designated Widget on the Home screen adjacent to the designated Home screen.

4. The Widget processing method according to any one of claims 1 to 3, wherein before the receiving the Widget placing instruction given by the user, the method further comprises:
receiving a Widget editing instruction given by the user, and simultaneously displaying the Widget content exhibiting area and the Home space exhibiting area according to the Widget editing instruction.

5. The Widget processing method according to any one of claims 1 to 4, wherein
the Home space exhibiting area displays one or more Home screens.

6. A Widget processing apparatus, comprising:
an instruction receiving module, configured to received a Widget placing instruction given by a user, wherein the Widget placing instruction is used for placing a designated Widget on a designated Home screen, the designated Widget is a Widget selected by the user in a Widget content exhibiting area, and the designated Home screen is a Home screen selected by the user in a Home space exhibiting area;
an instruction parsing module, configured to parse the Widget placing instruction received by the instruction receiving module to obtain the designated Widget and the designated Home screen;
a position determining module, configured to: if on the designated Home screen, there is not enough position for presenting the designated Widget, determine a display position of the designated Widget on a Home screen adjacent to the designated Home screen according to attribute information of the designated Widget, wherein the attribute information of the Widget comprises position occupation information of the Widget;
a Widget placing module, configured to place the designated Widget in the display position which is on the Home screen adjacent to the designated Home screen and is determined by the position determining module;
a first presenting module, configured to present the Widget content exhibiting area, so that the user selects a Widget in the Widget content exhibiting area; and
a second presenting module, configured to present the Home space exhibiting area, so that the user selects a Home screen in the Home space exhibiting area.

7. The mobile terminal according to claim 6, wherein the position determining module is specifically configured to: if on the designated Home screen, there is not enough position for presenting the designated Widget, and on the Home screen adjacent to the designated Home screen, there is enough position for presenting the designated Widget, determine the display position of the designated Widget on the Home screen adjacent to the designated Home screen.

8. The mobile terminal according to claim 6 or 7, wherein the position determining module comprises:
a Home screen creating unit, configured to create a Home screen if on the designated Home screen, there is not enough position for presenting the designated Widget, and on the Home screen adjacent to the designated Home screen, there is not enough position for presenting the designated Widget;
a screen placing unit, configured to place, in an adjacent position of the designated Home screen, the Home screen created by the Home screen creating unit; and
a position determining unit, configured to determine the display position of the designated Widget on the Home screen adjacent to the designated Home screen.

9. The mobile terminal according to any one of claims 6 to 8, further comprising:
a Widget editing unit, configured to receive a Widget editing instruction given by the user; and
a simultaneous presentation triggering unit, configured to trigger simultaneous presentation of the first presenting module and the second presenting module if the Widget editing unit receives the Widget editing instruction.

10. The Widget processing method according to any one of claims 6 to 9, wherein
a second displaying unit is specifically configured to display one or more Home screens in the Home space exhibiting area.

11. A mobile terminal, comprising: a display, an input apparatus, a memory, and a processor, wherein
the input apparatus is configured to receive a Widget placing instruction given by a user, wherein the Widget placing instruction is used for placing a designated Widget on a designated Home screen, the designated Widget is a Widget selected by the user in a Widget content exhibiting area, and the designated Home screen is a Home screen selected by the user in a Home space exhibiting area;
the memory is configured to store attribute information of the Widget, wherein the attribute information of the Widget comprises position occupation information of the Widget;
the processor is configured to parse the Widget placing instruction received by the the input apparatus to obtain the designated Widget and the designated Home screen; is further configured to: if on the designated Home screen, there is not enough position for presenting the designated Widget, determined a display position of the designated Widget on a Home screen adjacent to the designated Home screen according to the attribute information which is of the designated Widget and stored in the memory; and is further configured to place the designated Widget in the display position on the Home screen adjacent to the designated Home screen; and
the display is configured to present the Widget content exhibiting area, so that the user selects a Widget in the Widget content exhibiting area; and is further configured to present the Home space exhibiting area, so that the user selects a Home screen in the Home space exhibiting area.

12. The mobile terminal according to claim 11, wherein if on the Home screen adjacent to the designated Home screen, there is enough position for presenting the designated Widget, the processor is specifically configured to:
determine the display position of the designated Widget on the Home screen adjacent to the designated Home screen.

13. The mobile terminal according to claims 11 or 12, wherein if on the Home screen adjacent to the designated Home screen, there is not enough position for presenting the designated Widget, the processor is specifically configured to:
create a Home screen;
place, in an adjacent position of the designated Home screen, the Home screen created by the Home screen creating unit; and
determine the display position of the designated Widget on the Home screen adjacent to the designated Home screen.

14. The mobile terminal according to any one of claims 11 to 13, further comprising:
the input apparatus, further configured to receive a Widget editing instruction given by the user; and
the display, further configured to simultaneously display the Widget content exhibiting area and the Home space exhibiting area if the input apparatus receives the Widget editing instruction.

15. The Widget processing method according to any one of claims 11 to 14, wherein
the display is further configured to display one or more Home screens in the Home space exhibiting area.
